Europäisches Patentamt

European Patent Office

Office européen des brevets

(11) Publication number: **0 111 341**
A2

# (12) EUROPEAN PATENT APPLICATION

(21) Application number: 83112500.0

(22) Date of filing: 12.12.83

(51) Int. Cl.³: **C 08 F 2/00**
B 01 J 19/00
//(C08F2/00, 10/00)

(30) Priority: 13.12.82 JP 218817/82

(43) Date of publication of application:
20.06.84 Bulletin 84/25

(84) Designated Contracting States:
DE FR GB IT NL

(71) Applicant: SUMITOMO CHEMICAL COMPANY, LIMITED
15 Kitahama 5-chome Higashi-ku
Osaka-shi Osaka-fu(JP)

(72) Inventor: Baba, Kazuo
4-12, Aobadai-5-chome
Ichihara-shi(JP)

(72) Inventor: Mashita, Kentaro
9-3, Aobadai-4-chome
Ichihara-shi(JP)

(72) Inventor: Kawamata, Syozo
1114-8, Anegasaki
Ichihara-shi(JP)

(72) Inventor: Katao, Masaaki
135, Iriyamazu
Ichihara-shi(JP)

(72) Inventor: Kawai, Yoshio
9, Yushudainishi-1-chome
Ichihara-shi(JP)

(74) Representative: Vossius Vossius Tauchner Heunemann Rauh
Siebertstrasse 4 P.O. Box 86 07 67
D-8000 München 86(DE)

(54) Process for producing a vinyl polymer.

(57) In a process for producing an intended polymer by polymerizing at least one vinyl compound, an improvement which comprises calculating the concentration of the unreacted vinyl compound in the reactor, the composition of the polymer formed, and the amount thereof from the amount of heat calculated from the heat balance of the reactor, the amounts of raw materials fed to the reactor, the reactivity ratio of the vinyl compounds and the heat of polymerization per unit amount of each of the vinyl compounds, and regulating the amounts of raw materials to be fed into the reactor in such a way that the values thus calculated agree respectively with the predetermined target values of the polymer composition and the amount of polymer formed.

Fig. 1

Croydon Printing Company Ltd.

Sumitomo Chemical Company, Ltd.
Our Ref: S 757 EP

0111341

## PROCESS FOR PRODUCING A VINYL POLYMER          12. Dez. 1983

This invention relates to a process for producing a vinyl polymer, and more particularly, to a process for producing an intended vinyl polymer stably.

In the production of a vinyl polymer, it is very important for obtaining the intended polymer stably to maintain constant various factors of polymerization conditions as polymerization temperature, polymerization pressure, residence time, as well as concentrations of catalysts and feed materials in the reaction system. However, although some of these polymerization factors, for example the reaction temperature, can be detected and controlled in a relatively simple manner, there are some other factors, for example the concentration of feed material, which vary in the reaction system and are difficult to detect and control directly. Especially when two or more vinyl compounds are copolymerized, even if the polymerization temperature, polymerization pressure, and the feeding ratio of the vinyl compounds are kept constant, the concentrations of the unreacted monomers in the reaction system vary depending on the polymerization activity of the catalyst and the concentration thereof, and hence the composition of the resulting polymer fluctuates.

For controlling the polymerization of vinyl compounds, there has been known a method previously

0111341.

wherein the polymerization temperature, pressure and the like are kept constant, some suitable component in the reaction system is withdrawn and analyzed, and the amounts of materials to be fed in the system are regulated based on the result of the analysis. But this method is not desirable because the sampling of a specimen containing a polymer and the analysis of the components contained therein are very troublesome, and a time lag due to the time required for analysis is involved. When the polymerization system has a gas phase free from the polymer, the composition of the gas phase can be known by analysis relatively easily. But, on converting the composition of the gas phase into that of the system in which the polymerization is actually taking place, the accurate value of the latter is often difficult to obtain owing to the limitation due to mass transfer. Accordingly, the above method is not satisfactory for controlling the polymerization process.

There is also known a method which controls the polymerization process by measuring the heat evolved in polymerization. But this known method (Japanese Patent Publication No. 13047/60)only regulates the catalyst feeding rate so as to keep the rate of polymer formation constant, which latter rate is learnt from the knowledge of the heat evolved in the polymerization. This method can not give stably a copolymer having a fixed composition in copolymerization.

The present inventors have made extensive

0111341

studies on the control of such polymerization of vinyl compounds, and as a result, established a technique to control the polymerization easily and accurately, and attained to this invention.

An object of this invention is to provide a process for producing a vinyl polymer by which an intended polymer can be produced stably.

Other objects and advantages of this invention will become apparent from the following descriptions.

Thus, according to this invention, there is provided, in a process for producing an intended polymer by polymerizing at least one vinyl compound, an improvement which comprises calculating the concentration of the unreacted vinyl compound in the reactor, the composition of the polymer formed, and the amount thereof from the amount of reaction heat calculated from the heat balance of the reactor, the amounts of raw materials fed to the reactor, the reactivity ratio of the vinyl compounds and the heat of polymerization per unit amount of each of the vinyl compounds, and regulating the amounts of raw materials to be fed into the reactor in such a way that the values thus calculated agree respectively with the predetermined target values of the polymer composition and the amount of polymer formed.

This invention will be described further in detail below.

The polymerization of a vinyl compound using a catalyst is an exothermic reaction, and the value of evolved heat is characteristic to the individual vinyl

compound to be polymerized. Further, the relation between the concentrations of the vinyl compounds in the reaction system and the composition of the polymer obtained is in general determined unequivocally so long as the kind of the catalyst system and the polymerization conditions are kept constant. This invention provides, taking advantage of these situations, a process for producing a vinyl polymer, wherein the concentration of the unreacted vinyl compound in the reactor is determined from the heat and material balance of the reactor, and the amount of raw materials to be fed is regulated so as to keep the above concentration of the unreacted vinyl compound constant, thus to produce the intended polymer stably.

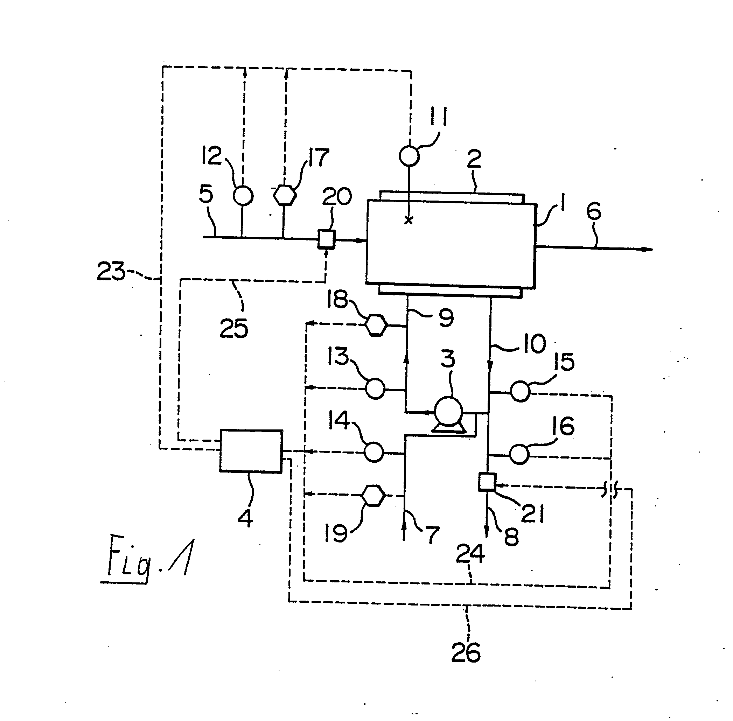

The accompanying drawing is a flow sheet illustrating an example of the embodiment of this invention. The process of this invention is explained below with reference to the drawing.

The polymerization is carried out in a reactor 1 provided with a heat-removing jacket 2. The raw mateials are fed into the reactor through a line (or plural lines) 5, and the reaction mixture is withdrawn therefrom through a line 6 in an amount corresponding to the fed amount. A fixed amount of cooling water is circulated through the reactor jacket 2 via lines 9 and 10 by means of a circulating pump 3. Cooling water of higher temperature is withdrawn through a line 8 out of the system, and cooling water of lower temperature in an amount corresponding to that of the former is introduced into the system through a line 7.

The temperatures of the reactor and each lines are measured with thermometers 11 to 16. The flow rates in the lines are measured with flow meters 17 to 19 as required. These measured values of temperatures and flow rates are input into a computer 4 via lines for instrumentation 23 and 24. The calculated results are compared with set values, and output signals to match the set values are transmitted through lines 25 and 26 to a flow controller 20 for raw materials and a flow controller 21 for the discharged water in line 8, to control the respective flow rates. The line 5 is shown here to represent the feed lines for various raw materials as the catalyst, diluent for polymerization and vinyl compounds collectively. The temperature measurements, flow rate measurements and flow controls can be made for each of the feed lines as required. The meausrement of flow rate in each line can be made by any suitable methods including a method to use a continuous measuring instrument such as an orifice-type flowmeter or a rotameter, one to detect the level change of a metering pipe, or one to charge batchwise by use of a metering pipe. Similarly, various methods can be used to control the flow rate in each line. The control may be effected by such methods as one to use a conventional flow control valve, one to charge batchwise by use of a metering pipe or, when the raw materials are introduced by means of a reciprocating pump, a method to regulate the speed of reciprocating motion.

In the computer 4, by using the data of the temperature and flow rate input from each line, physical characteristics of each raw material input beforehand (for example enthalpy), heat of polymerization of each vinyl compound, and reactivity ratio of each vinyl compound, the heat balance and the material balance are determined, the amount and composition of the polymer formed are calculated, and the values obtained are compared with the set values to output signals for the control instruments 20 and 21.

The heat removed from the polymerization reactor can be calculated from the flow rates of cooling waters through lines 7 and 8 and the difference in temperatures thereof. But the temperature difference ($\Delta T$) between the inner temperature of the reactor 1 and that of jacket 2 can also be used as a parameter. Namely, $\Delta T$ assumes a value corresponding to the amount of evolved heat when the overall heat transfer coefficient at the reactor wall is constant. Since an abrupt change in the evolving heat shows itself first as a change in $\Delta T$, $\Delta T$ can be used as the parameter for controlling reaction for a short-time.

If necessary, for the calculation of the heat balance, other physical quantities such as pressure, though not shown in the drawing, can be measured at each line or apparatus, and input to the computer 4. The method for determining the heat and material balance and the method for calculating the amount and composition of polymer formed are described concretely below.

Total amount of removed heat is calculated from the flow rates and temperature difference of cooling waters through lines 7 and 8. From this value, are subtracted the amounts of such heat other than that due to polymerization as the sensible heats of fed materials, heat generated by stirring, and heat released outside, to give the total amount of heat evolved by polymerization per unit time. This heat amount is expressed as Q.

It is assumed that, of the raw materials fed into the reaction system, i kinds of vinyl compounds (hereinafter referred to as "monomers") participate in the reaction. Of these i monomers, the fed amount, unreacted amount, and polymerized amount per unit time are put as follows respectively:

$M_i(1)$: Fed amount of the i-th monomer,

$M_i(2)$: Unreacted amount of the i-th monomer,

$M_i(3)$: Polymerized amount of the i-th monomer.

Further, the heat of polymerization of the i-th monomer per unit amount is put as $h_i$.

Firstly, from the heat balance holds the following equation:

$$Q = h_1 M_1(3) + h_2 M_2(3) + h_3 M_3(3) + \dots + h_i M_i(3).$$

From the material balance follows the i equations below:

$$M_1(1) = M_1(2) + M_1(3)$$

$$M_2(1) = M_2(2) + M_2(3)$$

$$\vdots$$

$$M_i(1) = M_i(2) + M_i(3)$$

Then, when the polymer composition is expressed taking the amount of the first monomer as 1 and that of the i-th monomer as $a_i$, the following i-1 equations hold:

$$M_2(3) = a_2 M_1(3)$$

$$M_3(3) = a_3 M_1(3)$$

$$\vdots$$

$$M_i(3) = a_i M_1(3)$$

Similarly, when the monomer composition is expressed taking the amount of the first monomer as 1 and that of the i-th monomer as $b_i$, the following i-1 equations hold;

$$M_2(2) = b_2 M_1(2)$$

$$M_3(2) = b_3 M_1(2)$$

$$\vdots$$

$$M_i(2) = b_i M_1(2)$$

Further, when the relationship between the monomer composition and the polymer composition is determined beforehand by a separate experiment, also $i-1$ equations hold as follows:

$$a_2 = f_2(b_2, b_3, \ldots, b_i)$$
$$a_3 = f_3(b_2, b_3, \ldots, b_i)$$
$$\vdots$$
$$a_i = f_i(b_2, b_3, \ldots, b_i)$$

From the foregoings, there hold $1+i+(i-1)+(i-1)+(i-1) = 4i-2$ equations. In these equations, $M_1(1)$, $M_2(1)$, $\ldots$, $M_i(1)$ are known, being already measured at line 5, and $h_1$, $h_2$, $\ldots$, $h_i$ are data representing physical properties, namely known values.

Accordingly, the number of unknowns are as follows:

$$M_1(2), M_2(2) \ldots\ldots, M_i(2) \qquad i$$
$$M_1(3), M_2(3) \ldots\ldots, M_i(3) \qquad i$$
$$a_2, a_3, \ldots\ldots, a_i \qquad i-1$$
$$b_2, b_3, \ldots\ldots, b_i \qquad i-1;$$

namely $4i-2$ in sum. The amount of unreacted monomer and the polymer composition are obtained by solving these equations. However, the relationship between the monomer composition and the polymer composition can also be represented not in a mathematical expression as above, but in a graph. In this case, the intended values can be obtained by determining a monomer composition from the graph assuming a value for polymer composition, substituting these values for corresponding letters in the material balance and heat balance equations, and repeating the assumption of the polymer composition and the calculation of material and heat balance until no inconsistency can be observed. Such repetitive calculations can be conducted advantageously by the use of the computor 4.

In any case, by measuring the heat evolved in polymerization as well as the amount of fed monomer, the amount of unreacted monomer, the amount of polymer, and the compositions thereof can be calculated based on the knowledge of the monomer reactivity ratio (the relationship between the composition of unreacted monomer and that of polymer formed). Naturally, this invention can also be applied to the case wherein i = 1, namely to the homopolymerization.

The amount and composition of the polymer thus obtained are compared with the objective values for production, and the amounts of the catalyst and the monomer to be fed are regulated accordingly to achieve the objective values.

Further, it is possible to calculate the heat which will be evolved in polymerization beforehand from the objective values for production and the amount of a suitable combination of monomers to be fed, and to regulate the amount of catalyst to be fed such that actually evolved heat agrees with that calculated above. But when some deviation from the calculated value of evolving heat occurs, it is very important to know what composition of polymer is being obtained. Also for attaining to the objective composition most efficiently, it is necessary to know what composition of polymer is being obtained.

Following the procedures mentioned above, the intended polymer can be produced stably.

This invention can be applied to various polymerizations of vinyl compounds including radical, cationic, and anionic polymerization. The radical polymerization is effected by the action of peroxides, azo compounds, redox initiators and the like, and is conducted in the form of bulk, solution, emulsion, or suspension polymerization. Representative examples of compounds subjected to radical polymerization include ethylene, styrene, vinyl chloride, vinylidene chloride, acrylonitrile, vinyl acetate, and methyl methacrylate.

The cationic polymerization is initiated by protonic acids such as hydrogen chloride and sulfuric acid, metal halides such as $BF_3$, $AlCl_3$ and $TiCl_4$, metal alkyls such as $AlC_2H_5Cl_2$ and $Al(C_2H_5)_3$, and acidic oxides such as $CrO_3$, $MoO_3$, and $SiO_2$-$Al_2O_3$. The compounds subjected to cationic polymerization include, for example, styrene, isobutene and alkyl vinyl ether.

The anionic polymerization uses as catalyst alkali metals, alkali metal complexes, organometallic compounds and the like. Examples of compounds subjected to anionic polymerization include styrene, butadiene, methyl methacrylate, acrylonitrile and vinylidene cyanide.

This invention can be applied further to the polymerization catalyzed by a combination of a transition metal compound and an organometallic compound, the so-called Ziegler-Natta catalyst. The polymerization by Ziegler-Natta catalyst uses a compound (halides, oxyhalides, esters etc.) of a transition metal of the groups IV to VIII and an organometallic compound of a metal of the groups I to III of the periodic table as the catalyst. There are also used catalyst systems wherein the transition metal compound is supported on a magnesium compound, silica, alumina and the like to enhance the catalytic activity.

The monomers which can be used in this invention include α-olefins such as ethylene, propylene, butene-1, pentene-1, hexene-1, and 4-methylpentene-1 as well as dienes such as butadiene and isoprene, and polar vinyl compounds such as methyl methacrylate, vinyl ether and vinyl chloride. The polymerization can be carried out by any of the methods of bulk, solution, slurry, and gas-phase polyemrization.

The polymerization conditions for the process of this invention are not restricted specifically, and may be suitably selected in accordance with the method of polymerization adopted. This invention may be practiced in a single reactor, but it may also be applied to plural

0111341

reactors connected in series, namely to so-called series polymerization. In the series polymerization, when polymers of different compositions are formed in each of the reactors, it is impossible to know individually the respective polymer composition being formed in each of the reactors by analyzing merely the polymer obtained in the latter step of polymerization, and hence it is difficult to control individually the reaction in each of the reactors. This invention is applied most effectively to such a case because it enables to know and control individually the respective polymer composition in each of the reactors, and thus to produce the objective polymer stably.

This invention is applied effectively to a case where polymerization is conducted by continuous operation, but it may also be applied to non-stationary operations such as batch-wise polymerization. The application of the technique of this invention enables, even in batch-wise polymerization, to know the composition and the amount of polymer formed at time intervals during the progress of polymerization from material balance, heat balance, and monomer reactivity ratio, and thus to control the polymerization stably.

Thus, this invention is in no way restricted with respect to methods of polymerization, polymerization conditoins, and forms of operation, etc. The invention is further described in detail below with reference to the following Example.

Example

An ethylene-butene-1 copolymer was produced by a continuous operation using the polymerization equipment shown in the attached drawing.

In a stationary state, an organoaluminum catalyst, a transition metal compound catalyst containing titanium, hydrogen, ethylene, butene-1 and butane were fed at constant rates to the reactor through the line 5. The temperatures, pressures, and flow rates of the raw materials being fed were measured separately. The polymerization was continued withdrawing a corresponding amount of the reaction mixture to those of the fed materials. The reactor was operated in the substantial absence of a gas phase.

The temperature of the reactor 1 was controlled by the cooling water circulated by the pump 3 to keep a constant value. The temperature of the circulating water was controlled by introducing a cooling water of lower temperature from the line 7 and withdrawing a corresponding amount of a cooling water of higher temperature through the line 8. The physical quantities measured in each of the lines and instruments were input to the computer 4 to be subjected to the calculation of the material and heat balance.

Here, with respect to ethylene and butene-1 which participate in the reaction of this invention, the fed amount, the heat of reaction, the reactivity ratio and other quantities are defined as follows:

| | Fed amount (line 5) kg/H | Unreacted amount (line 6) kg/H | Polymerized amount (line 6) kg/H | Heat of polymerization kcal/kg |
|---|---|---|---|---|
| Ethylene | $F_1$ | a | A | $h_1$ |
| Butene-1 | $F_2$ | b | B | $h_2$ |

The reactivity ratio $(A/B)/(a/b) = r$.

Here, $F_1$ and $F_2$ are measured values, and $h_1$, $h_2$, and $r$ are values obtained beforehand.

Measured amount of heat: $Q$ kcal/H.

Here, $Q$ represents the amount of heat evolved by polymerization alone, which can be obtained by subtracting, from the total amount of heat calculated from the heat balance of cooling water, the amounts of such heat other than that due to the polymerization as the sensible heat of feed materials, the heat required to keep the reaction mixture in the reactor flowing, and the heat dissipated from the reactor.

From the material balance:

$$F_1 = a + A \qquad (1)$$

$$F_2 = b + B \qquad (2)$$

From the reactivity ratio:

$$(A/B)/(a/b) = r \qquad (3)$$

From the heat balance:

$$Q = h_1 A + h_2 B \qquad (4)$$

From equations (1) to (4), the following equations can be set up:

$$A = \frac{-h_1 F_1 r - h_2 F_2 + Q(1-r) + \sqrt{\{h_1 F_1 + h_2 F_2 - Q(1-r)\}^2 + 4h_1(1-r)QF_1 r}}{2h_1(1-r)}$$

-------------------- (5)

$$B = F_2 A / \{(F_1 - A)r + A\}$$ -------------------- (6)

The heats of polymerization of ethylene and butene-1 are:

$$h_1 = 910 \text{ kcal/kg}, \quad h_2 = 360 \text{ kcal/kg}.$$

A separate experiment under the same conditions as those in this Example gave:

$$r = 50.$$

At a certain point of time in the polymerization of, this Example, the flow rate in the line 5 and Q had the following values:

$$F_1 = 10 \text{ kg/H}$$

$$F_2 = 3.7 \text{ kg/H}$$

$$Q = 8624 \text{ kcal/H}$$

From equations (5) and (6), by the use of the computor 4, A and B were obtained as follows:

$$A = 9.2 \text{ kg/H}, \quad B = 0.7 \text{ kg/H}.$$

Consequently, the butene-1 content of the polymer and the polymerized amount were calculated at 7.1% by weight and 9.9 kg/H, respectively.

On the other hand, the objective values in this Example were as follows:

Butene-1 content of the polymer, 8.0% by weight:

Polymerized amount, 10 kg/H.

The objective values can be attained, while keeping the amount of feed ethylene at 10 kg/H, by giving Q and E the following values:

$$Q = 8660 \text{ kcal/H}$$
$$F_2 = 4.3 \text{ kg/H}$$

Accordingly, the amount of butene-1 being fed was increased a little, and further the amount of the catalyst being fed was increased so as to make Q 8660 kcal/H. These operations were controlled automatically by the outputs from the computor.

Owing to the above alteration of reaction conditions, the difference between the temperature inside the reactor and that of the jacket, $\Delta T$, increased a little. The change of $\Delta T$ was monitored to confirm that the polymerization was proceeding as intended. Further, the material balance was determined from the flow rates and difference of temperatures in lines 7 and 8, to confirm the progress of polymerization thereby.

After a while, the intended polymer has come to be obtained stably.

0111341

WHAT IS CLAIMED IS:

1.      In a process for producing an intended polymer by polymerizing at least one vinyl compound, an improvement which comprises calculating the concentration of the unreacted vinyl compound in the reactor, the composition of the polymer formed, and the amount thereof from the amount of heat calculated from the heat balance of the reactor, the amount of raw materials fed to the reactor, the reactivity ratio of the vinyl compounds and the heat of polymerization per unit amount of each of the vinyl compounds, and regulating the amounts of raw materials to be fed into the reactor in such a way that the values thus calculated agree respectively with the predetermined target values of the polymer composition and the amount of polymer formed.

2.      A process according to Claim 1, wherein said calculation and regulation are performed constantly by using a computer.

3.      A process according to Claim 1, wherein the difference between the temperature inside the reactor and that of the reactor jacket is used as a parameter in the calculation of the amount of reaction heat.

4.      A process according to Claim 1, wherein the flow rate of a cooling medium supplied into the reaction jacket from outside of the system as well as the difference in temperatures of said cooling medium at the inlet and at the outlet are used as parameters in the calculation of the amount of reaction heat.

0111341

5.      A process according to Claim 1, wherein a copolymerization is carried out by using plural vinyl compounds
to be polymerized.

6.      A process according to Claim 1, wherein the vinyl
compound is a 1-olefin.

7.      A process according to Claim 6, wherein the
1-olefin is ethylene and/or a 1-olefin having 3 to 12
carbon atoms and a Ziegler-Natta catalyst is used as the
catalyst.

8.      A process according to Claim 1, wherein the
reactor is one having plural reactors connected in series.

9.      A process accordingto Claim 1, wherein the polymerization is a solution or slurry polymerization.

10.     A process according to Claim 1, wherein the
polymerization is a gas-phase polymerization.

11.     A process according to Claim 1, wherein the
reactor is operated in a state filled with a liquid.

Fig. 1